# FASCICULE DE BREVET EUROPEEN

(11) **EP 3 576 423 B1**
(45) Date de publication et mention de la délivrance du brevet: **21.04.2021**
(21) Numéro de dépôt: 19175425.8
(22) Date de dépôt: 20.05.2019
(51) Int. Cl.: H04R 1/02, B60R 11/02

(54) **HAUT-PARLEUR COMPRENANT DES MOYENS DE PRÉ-MAINTIEN AVANT FIXATION SUR UNE PIÈCE RÉCEPTRICE**
LAUTSPRECHER, DER PROVISORISCHE HALTEMITTEL VOR DER ENDGÜLTIGEN BEFESTIGUNG AUF EINEM AUFNAHMETEIL UMFASST
SPEAKER COMPRISING PRE-HOLDING MEANS BEFORE ATTACHMENT TO A RECEIVING PART

(30) Priorité: 31.05.2018 FR 1854705
(43) Date de publication de la demande: 04.12.2019
(73) Titulaire: RENAULT s.a.s., 92100 Boulogne-Billancourt (FR)
(72) Inventeur: PARCELLIER, CHRISTOPHE, 78390 BOIS D ARCY (FR)

(56) Documents cités:
- EP-A1- 2 332 783
- FR-A1- 2 908 710
- JP-A- 2007 158 933

## Description

La présente invention concerne le domaine des haut-parleurs destinés à être intégrés notamment dans les véhicules automobiles.

Afin d'améliorer la mise en position et le maintien en position des hauts parleurs dans le véhicule automobile, il est connu de prévoir une structure de montage.

Ainsi, pour des haut-parleurs de poids important, d'environ 900g, une telle structure de montage permet une fixation plus facile du haut-parleur.

De plus, dû à la qualité des lèche-vitres actuels, aux découpes des vitres et à la position du haut-parleur dans la porte du véhicule, les fuites d'eau de pluie sont accrues dans le haut-parleur.

On peut se référer à cet égard au document JP 2007158933 - A1 qui décrit un ensemble haut-parleur destiné à être fixé sur cadre. Ledit ensemble haut-parleur comprend une structure d'assistance au montage formée par un crochet métallique distinct du corps du haut-parleur et venant s'engager dans un rail de guidage prévu sur ledit corps du haut-parleur. L'ensemble haut-parleur comprend en outre une collerette de fixation rapportée coopérant avec un trou correspondant prévu dans le cadre.

Toutefois, l'adjonction d'un crochet métallique augmente le nombre de pièces de l'ensemble haut-parleur et augmente le coût de fabrication, ainsi que le temps d'assemblage.

On peut également se référer au document US 2003/0019990 - A1 qui propose un support pour le montage d'un haut-parleur comportant une plaque de base et un système de guidages prévu sur une face de ladite plaque de base et dans lesquels coulisse un bord du haut-parleur. Un crochet prévu sur ladite plaque de base vient ensuite bloquer le haut-parleur.

Toutefois, une telle solution nécessite l'utilisation d'une plaque de base, ce qui augmente l'encombrement du haut-parleur et le coût de fabrication.

Il existe un besoin d'améliorer le montage des haut-parleurs, sans augmenter l'encombrement et tout en améliorant l'étanchéité desdits haut-parleurs.

Le but de la présente invention est donc de fournir un système fiable pour le montage de haut-parleurs sur un élément de l'habitacle d'un véhicule automobile.

L'invention a pour objet un haut-parleur selon la revendication 1.

Ainsi, grâce à la combinaison des crochets et des portions d'appui inférieures, le haut-parleur est positionné de manière fiable par rapport à la pièce réceptrice de manière à ce que les perçages soient alignés.

Le crochet et la portion d'appui forment des moyens de pré-maintien du haut-parleur sur la pièce réceptrice avant la fixation dudit haut-parleur sur ladite pièce réceptrice.

Avantageusement, le crochet est destiné à coopérer avec un ergot correspondant sur la pièce réceptrice.

Le crochet comprend, par exemple, une première partie s'étendant à partir d'une surface intérieure de la paroi latérale vers la pièce réceptrice et une deuxième partie inclinée par rapport à la première partie et s'étendant verticalement, notamment vers le bas.

Par exemple, la deuxième partie s'étend de manière sensiblement perpendiculaire à la première partie.

Le haut-parleur comprend deux crochets s'étendant de chaque côté du haut-parleur, parallèles entre eux et symétriques par rapport au plan de symétrie du haut-parleur. Les deux crochets sont destinés à coopérer respectivement avec un ergot correspondant prévus sur la pièce réceptrice. Chaque crochet comprend une première partie s'étendant à partir de la surface intérieure vers la pièce réceptrice et une deuxième partie inclinée par rapport à la première partie et s'étendant verticalement, notamment vers le bas.

Selon un autre mode de réalisation, la première partie des crochets a un rayon de courbure en concordance de forme avec un bord tombé en saillie de la pièce réceptrice et la deuxième partie s'étend verticalement, notamment vers le bas et selon un rayon de courbure et non de manière strictement linéaire rectiligne.

Ainsi, les crochets ont une forme plus fluide que les crochets du mode de réalisation précédent.

Les zones du bord tombé de la pièce réceptrice sur lesquelles viennent coopérer les crochets présentent une forme plus fluide, et s'apparentent désormais davantage à un décrochage de la pièce réceptrice.

Les crochets sont, par exemple, réalisés dans le même matériau que le matériau du corps du haut-parleur.

Par exemple en matière plastique, tel que par exemple de l'acrylonitrile butadiène styrène, d'acronyme « ABS », ou du polypropylène ou toute autre matière plastique compatible avec le moulage par injection.

Selon un mode de réalisation, le haut-parleur comprend en outre, en partie inférieure, deux portions d'appui s'étendant, par exemple, horizontalement à partir de la surface intérieure de la paroi latérale au-delà de la collerette vers la pièce réceptrice et destinés à venir se positionner dans un orifice de réception du haut-parleur dans la pièce réceptrice. Ces portions d'appui sont symétriques par rapport au plan de symétrie du haut-parleur et chacune présente une plage angulaire de l'ordre de 15° par exemple et de manière non limitative.

Les portions d'appui sont, par exemple, réalisées dans le même matériau que le matériau du corps du haut-parleur.

Les portions d'appui sont, par exemple, reliées entre elles, formant une paroi d'étanchéité, par exemple, inférieure permettant la protection contre l'eau de pluie. La paroi d'étanchéité permet d'améliorer efficacement l'étanchéité du haut-parleur.

Les éléments nécessaires au fonctionnement du haut-parleur sont intégrés dans un boitier monté dans le corps et s'étendant depuis la paroi avant vers la paroi arrière, tout en laissant subsister un espace latéral avec la paroi latérale.

Selon un mode de réalisation, chaque portion d'appui comprend au moins un godron sensiblement horizontal permettant le centrage du haut-parleur, de manière à positionner en XZ le haut-parleur en face des trous de fixation de la pièce réceptrice. Ces godrons servent également de moyen de rattrapage des jeux.

Selon un autre mode de réalisation, les premières parties des crochets comportent sur leur surface extérieure au moins un godron horizontal permettant le centrage du haut-parleur, de manière à positionner en XZ le haut-parleur en face des trous de fixation de la pièce réceptrice. Ces godrons servent également de moyen de rattrapage des jeux.

Avantageusement, la surface intérieure de la paroi comprend en outre au moins une nervure de renforcement de structure sur toute la périphérie de la surface intérieure. Ces nervures sont venues de matière avec le corps du haut-parleur et forment ainsi une seule pièce moulée ou imprimée. Le nombre de nervures total peut être par exemple de dix, et sont agencées par paires des nervures.

Selon un mode de réalisation, le haut-parleur comprend au moins une saillie de blocage s'étendant à partir de la surface intérieure de la paroi latérale vers la pièce réceptrice.

Les saillies de blocage ont pour fonction d'empêcher la rotation du haut-parleur lors du pré-maintien. Chaque saillie de blocage peut être disposée entre deux nervures d'une paire de nervures. Les saillies sont venues de matière avec le corps du haut-parleur et forment ainsi une seule pièce moulée ou imprimée. De manière nullement limitative, le nombre de saillies est de deux. En variante, on pourrait prévoir un nombre différent de saillies de blocage. Les deux saillies sont symétriques par rapport au plan de symétrie du haut-parleur.

En variante, ces saillies de blocage peuvent être remplacées par un prolongement angulaire, de quelques degrés par exemple, de la paroi d'étanchéité de manière à bloquer en rotation le haut-parleur lors du pré-maintien puisque l'orifice 24 n'est pas exactement circulaire mais présente des aplanissements latéraux.

Selon un autre mode de réalisation, le haut-parleur comprend en outre, en partie inférieure, une portion d'appui s'étendant horizontalement à partir de la surface intérieure de la paroi avant vers la pièce réceptrice au-delà de la collerette et destinés à venir se positionner dans un orifice de réception du haut-parleur prévu sur la pièce réceptrice. La portion d'appui est en appui sur un bord tombé en saillie de la surface arrière de la pièce réceptrice.

Ces nervures et saillies sont venues de matière avec le corps du haut-parleur et forment ainsi une seule pièce moulée ou imprimée.

Le perçage est destiné à être aligné avec au moins un perçage correspondant prévu sur la pièce réceptrice.

Par exemple, les perçages sont au nombre de trois.

Les crochets, nervures, saillies sont venues de matière avec le corps du haut-parleur et forment ainsi une seule pièce moulée ou imprimée.

Selon un deuxième aspect, l'invention concerne un véhicule automobile comprenant un élément de l'habitacle formant pièce réceptrice pour la fixation d'un haut-parleur tel que décrit précédemment.

La pièce réceptrice peut être, par exemple, une garniture de porte, un tableau de bord, un plateau arrière, un hayon arrière, etc...

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente une vue en perspective d'un haut-parleur selon un premier mode de réalisation de l'invention monté sur une pièce réceptrice ;
- la figure 2 illustre une vue de derrière du haut-parleur selon la figure 1 ;
- la figure 3 illustre une vue de dessous du haut-parleur selon la figure 1 ;
- la figure 4 représente une vue en perspective d'un haut-parleur selon un autre mode de réalisation de l'invention monté sur une pièce réceptrice.
- la figure 5 représente une vue de derrière d'un haut-parleur monté sur une pièce réceptrice selon un autre mode de réalisation ; et
- les figures 6 et 7 illustrent des détails du haut-parleur et de la pièce réceptrice de la figure 5.

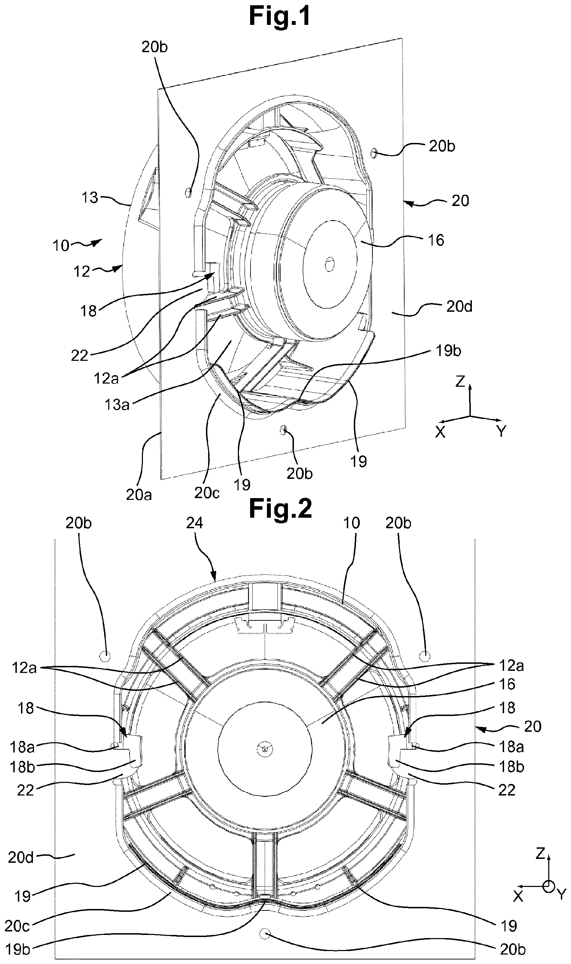

Tel qu'illustré sur les figures 1 à 3, un haut-parleur, référencé 10 dans son ensemble, est destiné à être fixé sur une pièce réceptrice 20, telle que par exemple un élément de l'habitacle d'un véhicule automobile nécessitant un montage ou un retrait facile et rapide. La pièce réceptrice 20, généralement en tôle, peut être, par exemple, une garniture de porte, un tableau de bord, un plateau arrière, etc...

Le haut-parleur 10 comprend un corps 12 de haut-parleur de forme générale cylindrique creux délimité par une paroi avant 13 du côté de l'habitacle à sonoriser du véhicule, une paroi arrière 14 destinée à être fixée sur la pièce réceptrice 20 et une paroi latérale 15 reliant lesdites parois avant et arrière 13, 14. La membrane 13a est par exemple constituée de papier, de bambou, de fibre de verre ou encore de lin.

Le fonctionnement du haut-parleur est connu et ne sera pas davantage décrit. Les éléments nécessaires au fonctionnement du haut-parleur 10 sont intégrés dans un boitier 16 central monté dans le corps 12 et s'étendant depuis la paroi avant 13 vers la paroi arrière 14, tout en laissant subsister un espace latéral avec la paroi latérale 15.

La paroi arrière 14 forme une collerette destinée à venir en appui sur une surface avant sensiblement plane 20a de la pièce réceptrice en tôle. Ladite collerette 14 comprend en outre des perçages 14a pour la fixation, par exemple par visserie, rivets (non représentés), destinés à être alignés avec des perçages correspondants 20b prévus sur la pièce réceptrice 20. Tel qu'illustré, et à titre nullement limitatif, les perçages 14a sont au nombre de trois.

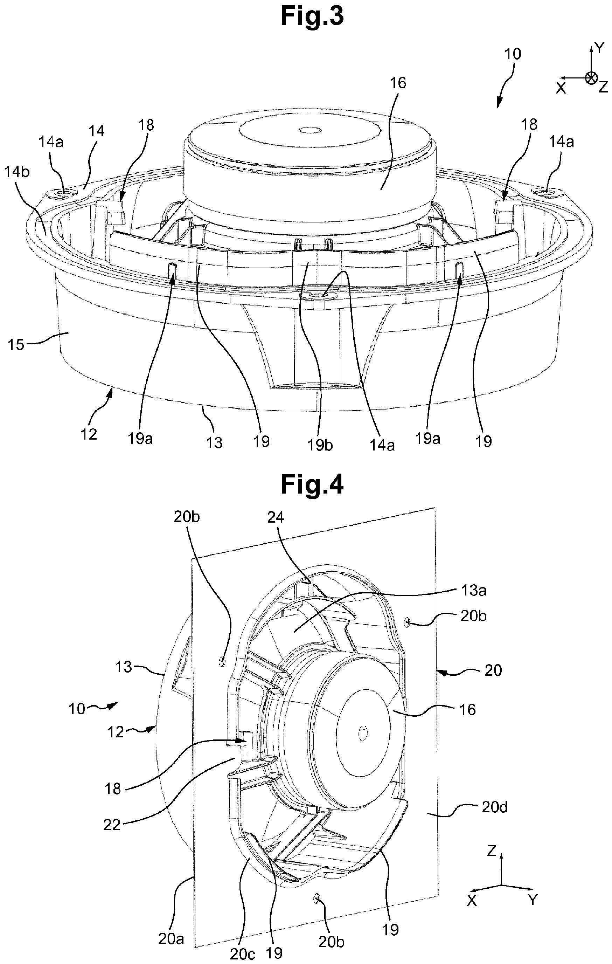

La collerette 14 comprend en outre, sur sa surface arrière, un logement 14b (visible sur la figure 3), adapté à recevoir un joint périphérique d'étanchéité (non représenté. Ledit joint est, par exemple, une mousse de polyuréthane expansive de 5 mm d'épaisseur déposée par points ou en continu dans le logement 14b et assurant l'étanchéité entre le haut-parleur 10 et la surface avant sensiblement plane 20a de la pièce réceptrice 20.

Le haut-parleur 10 comprend en outre deux crochets 18 s'étendant de chaque côté du haut-parleur et destinés à coopérer respectivement avec un ergot 22 correspondant prévu sur la pièce réceptrice 20. Chaque crochet 18 comprend une première partie 18a s'étendant à partir de la surface intérieure de la paroi latérale 15 vers la pièce réceptrice 20 et une deuxième partie 18b sensiblement perpendiculaire à la première partie 18a et s'étendant verticalement, vers le bas.

Les deux crochets 18 sont parallèles entre eux et symétriques par rapport au plan de symétrie vertical du haut-parleur 10. Ils ont été représentés positionnés à mi-hauteur du corps du haut-parleur néanmoins, ils pourraient aussi être positionnés en partie supérieure du haut-parleur.

En variante, on pourrait également prévoir un unique crochet et son ergot afférent en partie centrale supérieure du haut-parleur.

Les crochets 18 sont venus de matière avec le corps 12 du haut-parleur et forment ainsi une seule pièce moulée, ou imprimée en trois dimensions.

Les crochets 18 peuvent être réalisés dans le même matériau que le matériau du corps du haut-parleur ou dans un matériau différent. Par exemple, lorsque les crochets 18 sont réalisés dans le même matériau que celui du corps du haut-parleur 10, on peut prévoir l'utilisation du plastique, tel que par exemple de l'acrylonitrile butadiène styrène, d'acronyme « ABS », ou du polypropylène ou toute autre matière plastique compatible avec le moulage par injection.

Les crochets 18 ont pour fonction d'empêcher le basculement du haut-parleur 10. Entre le boitier central 16 et la paroi latérale 15 intérieure sont disposées des nervures 12a de renforcement de structure sur toute la périphérie de la surface intérieure de la paroi latérale 15. Ces nervures 12a sont venues de matière avec le corps 12 du haut-parleur 10 et forment ainsi une seule pièce moulée ou imprimée. Tel qu'illustré, et de manière nullement limitative, le nombre de nervures 12a total est de dix, et sont agencées par paires des nervures.

Le haut-parleur 10 comprend en outre, en partie inférieure, deux portions d'appui 19 (représentées reliées entre elles sur les figures) s'étendant horizontalement à partir de la surface intérieure de la paroi latérale 15 vers la pièce réceptrice 20 au-delà de la collerette 14 et destinés à venir se positionner dans un orifice 24 de réception du haut-parleur 10 prévu sur la pièce réceptrice 20. Les portions d'appui 19 sont en appui sur un bord tombé 20c en saillie de la surface arrière 20d de la pièce réceptrice 20. Cette partie 19 peut être également monobloc. Les portions d'appui 19 peuvent également comporter, sur leur surface extérieure, des godrons horizontaux 19a (visibles sur la figure 3), servant de moyen de centrage du haut-parleur, de manière à positionner en XZ le haut-parleur en face des trous de fixation 20b de la pièce réceptrice 20, ainsi que de moyen de rattrapage des jeux.

L'orifice 24 de réception est sensiblement circulaire, même s'il présente des « aplanissements » latéraux, et mesure par exemple environ 16 cm de diamètre.

Tel qu'illustré, les portions d'appui inférieures 19 sont reliées entre elles, formant une paroi d'étanchéité 19b permettant la protection contre l'eau de pluie. Cette paroi d'étanchéité 19b présente une plage angulaire minimum de l'ordre de +/-45°. La paroi d'étanchéité 19b représentée a une forme de vague mais cette forme est optionnelle dans la mesure où une telle forme est complexe à réaliser en tôlerie.

En variante, on pourrait ne pas prévoir une telle paroi d'étanchéité 19b, tel qu'illustré dans le mode de réalisation de la figure 4 dans lequel les mêmes éléments portent les mêmes références, on conserverait alors deux portions d'appui inférieures 19 distinctes non reliées entre elles, et pourvues chacune d'un ou de plusieurs godrons 19a de centrage.

Grâce à la combinaison des crochets 18 et des portions d'appui inférieures 19 et de leurs godrons de centrage 19a, le haut-parleur 10 est centré de manière fiable par rapport à la pièce réceptrice 20 de manière à ce que les perçages 14a, 20b soient alignés.

Le haut-parleur est ainsi en appui-plan sur trois points de fixation du haut-parleur.

Le haut-parleur 10 est monté sur la pièce réceptrice 20 comme suit. Le haut-parleur 10 est positionné dans l'orifice 24 de la pièce réceptrice 20 jusqu'à engagement des crochets 18 avec les ergots 22 correspondants de la pièce réceptrice 20 en tôle, puis le haut-parleur 10 vient en appui via ses deux portions d'appui 19 sur ladite pièce réceptrice 20. Les ergots 22 de la pièce réceptrice 20 sont représentés comme des quarts de disque, d'environ 1,5 cm de rayon, en saillie de la pièce réceptrice 20 et dans son même plan.

Le haut-parleur 10 peut ensuite être relâché avant d'être fixé sur la pièce réceptrice 20 au moyen par exemple de vis ou de rivets (non représentés), insérés dans les perçages 14a de la collerette 14 en regard des perçages correspondants 20b prévu sur la pièce réceptrice 20. En effet, le poids du haut-parleur 10 est soutenu par les portions d'appui 19, notamment par les godrons 19a, et les crochets 18 permettent d'éviter son basculement.

Les crochets 18 de pré-maintien, de même que la paroi d'étanchéité 19b, étant intégrés au haut-parleur, ils ne constituent pas des pièces supplémentaires et leur forme permet un démoulage facile, sans avoir à ajouter un tiroir dans le moule. Le pré-maintien obtenu facilite ainsi le travail des opérateurs, qui peuvent alors prendre la riveteuse pour fixer le haut-parleur sans avoir à tenir le haut-parleur en place.

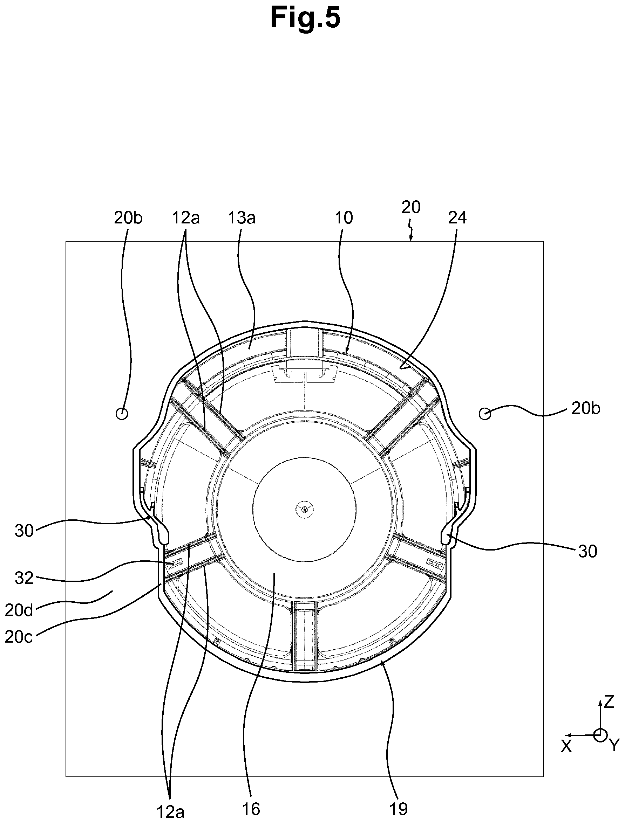

Le haut-parleur 10 illustré sur les figures 5 à 7, dans lesquelles les mêmes éléments portent les mêmes références, diffère du haut-parleur illustré sur les figures 1 à 4 notamment par la forme des crochets.

En effet, la forme des crochets n'est pas limitée à la forme des crochets 18 représentés sur les figures 1 à 4.

Dans le mode de réalisation des figures 5 à 7, le haut-parleur 10 comprend deux crochets 30 s'étendant de chaque côté du haut-parleur et destinés à coopérer respectivement avec des zones de la pièce réceptrice 20 en venant épouser la forme du bord tombé 20c de la pièce réceptrice 20.

Chaque crochet 30 comprend une partie principale 30a s'étendant à partir de la surface intérieure de la paroi latérale 15 vers la pièce réceptrice 20. La partie principale 30 a un rayon de courbure en concordance de forme avec le bord tombé 20c de la pièce réceptrice.

Chaque crochet comprend en outre une deuxième partie 30b et s'étendant, vers le bas, préférentiellement selon un rayon de courbure et non de manière strictement linéaire rectiligne.

Les deux crochets 30 sont symétriques par rapport au plan de symétrie vertical du haut-parleur 10. Ils ont été représentés positionnés à mi-hauteur du corps du haut-parleur néanmoins, ils pourraient aussi être positionnés en partie supérieure du haut-parleur. En variante, on pourrait également prévoir un unique crochet en partie centrale supérieure du haut-parleur.

Les crochets 30 sont venus de matière avec le corps 12 du haut-parleur et forment ainsi une seule pièce moulée, ou imprimée en trois dimensions.

Les crochets 30 peuvent être réalisés dans le même matériau que le matériau du corps du haut-parleur ou dans un matériau différent. Par exemple, lorsque les crochets 30 sont réalisés dans le même matériau que celui du corps du haut-parleur 10, on peut prévoir l'utilisation du plastique, tel que par exemple de l'acrylonitrile butadiène styrène, d'acronyme « ABS », ou du polypropylène ou toute autre matière plastique compatible avec le moulage par injection.

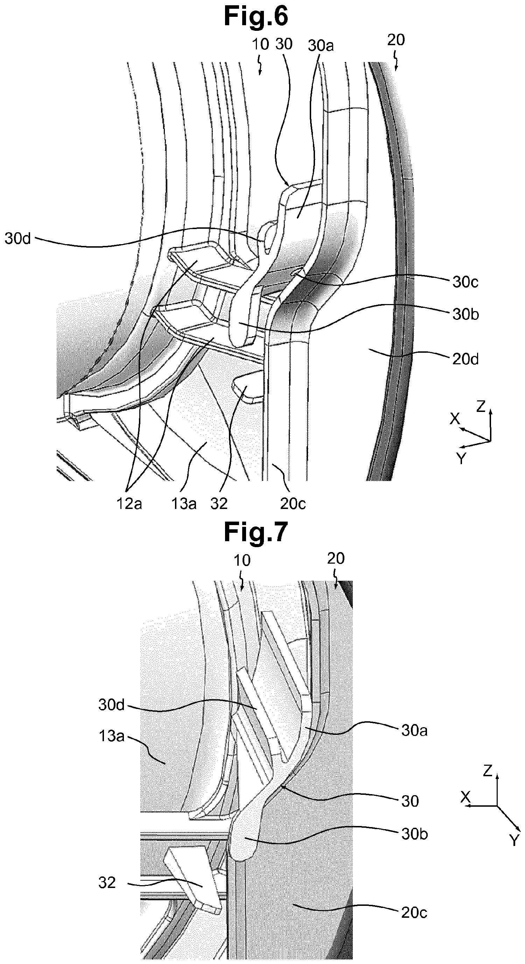

Chacun des crochets 30 peut également comporter sur leur surface extérieure des godrons horizontaux 30c (visibles sur la figure 6), servant de moyen de centrage du haut-parleur, de manière à positionner en XZ le haut-parleur en face des trous de fixation 20b de la pièce réceptrice 20, ainsi que de moyen de rattrapage des jeux.

Ainsi, les crochets 30 ont une forme plus fluide que les crochets 18 du mode de réalisation précédent.

Les zones (non référencées) du bord tombé 20c de la pièce réceptrice 20 sur lesquelles viennent coopérer les crochets 30 présentent une forme plus fluide, et s'apparentent désormais davantage à un décrochage de la pièce réceptrice, contrairement aux ergots 22 illustrés sur les modes de réalisation précédents.

Chaque crochet 30 comprend en outre une patte 30d s'étendant verticalement dans la direction opposée à la deuxième partie 30b et sert de renfort structurel.

Le haut-parleur 10 comprend en outre deux saillies de blocage 32 s'étendant à partir de la surface intérieure 13a de la paroi avant 13 vers la pièce réceptrice 20.

Les saillies de blocage 32 ont pour fonction d'empêcher la rotation du haut-parleur 10 lors du pré-maintien. Tel qu'illustré, chaque saillie de blocage 32 est disposée entre deux nervures 12a d'une paire de nervures. Les saillies 32 sont venues de matière avec le corps 12 du haut-parleur 10 et forment ainsi une seule pièce moulée ou imprimée. Tel qu'illustré, et de manière nullement limitative, le nombre de saillies 32 est de deux. En variante, on pourrait prévoir un nombre différent de saillies de blocage 32.

Les deux saillies 32 sont symétriques par rapport au plan de symétrie vertical du haut-parleur 10.

En variante, ces saillies de blocage peuvent être remplacées par un prolongement angulaire de quelques degrés de la paroi d'étanchéité 19 de manière à bloquer en rotation le haut-parleur lors du pré-maintien puisque l'orifice 24 n'est pas strictement circulaire mais présente des aplanissements latéraux.

Le haut-parleur 10 comprend en outre, en partie inférieure, une portion d'appui 19 s'étendant horizontalement à partir de la surface intérieure de la paroi latérale vers la pièce réceptrice 20 au-delà de la collerette 14 et destinés à venir se positionner dans un orifice 24 de réception du haut-parleur 10 prévu sur la pièce réceptrice 20. La portion d'appui 19 est en appui sur un bord tombé 20c en saillie de la surface avant 20d de la pièce réceptrice 20.

Ces nervures 12a et saillies 32 sont venues de matière avec le corps 12 du haut-parleur et forment ainsi une seule pièce moulée ou imprimée.

En cas de besoin le haut- parleur peut ne pas être monté tel que représenté mais incliné jusqu'à 50° d'un côté ou de l'autre en fonction des besoins d'implantation dans le véhicule.

Grâce aux crochets de pré-maintien du haut-parleur intégrés directement par moulage audit haut-parleur, aucune pièce supplémentaire au montage du haut-parleur n'est nécessaire. Dès que le haut-parleur est riveté ou vissé, les crochets ne sont plus en contact avec la tôle car le joint en mousse s'est comprimé, seuls les contacts sur les godrons demeurent. Ces crochets ne servent que de pré-maintien.

Le montage des haut-parleurs sur la pièce réceptrice est facilité, et ce, en diminuant l'encombrement et tout en améliorant l'étanchéité desdits haut-parleurs.

## Revendications

1. Haut-parleur (10) destiné à être fixé sur une pièce réceptrice (20) comprenant une surface avant (20a), une surface arrière (20d), le haut-parleur (10) comprenant un corps (12) délimité par une paroi avant (13), une paroi arrière (14) destinée à être fixée sur la pièce réceptrice (20) et une paroi latérale (15) reliant lesdites parois avant et arrière (13, 14), la paroi arrière (14) formant une collerette destinée à venir en appui sur la surface avant (20a) sensiblement plane de la pièce réceptrice (20) et comprenant au moins un perçage (14a) pour la fixation sur la pièce réceptrice (20), **caractérisé en ce que** le haut-parleur (10) comprend deux crochets (18, 30) de pré-maintien destinés à coopérer avec la pièce réceptrice (20), lesdits crochets (18, 30) étant venus de matière avec le corps (12) du haut-parleur (10) et s'étendant de chaque côté du haut-parleur, parallèles entre eux et symétriques par rapport au plan de symétrie du haut-parleur (10) et **en ce que** le haut-parleur (10) comprend, en partie inférieure, au moins une portion d'appui (19) s'étendant horizontalement à partir d'une surface intérieure de la paroi latérale (15) au-delà de la collerette et destinée à venir se positionner dans un orifice (24) de réception du haut-parleur (10) prévu sur la pièce réceptrice (20) pour être en appui sur un bord tombé (20c) en saillie de la surface arrière (20d) de la pièce réceptrice (20).

2. Haut-parleur selon la revendication 1, dans lequel chaque crochet (18, 30) comprend une première partie (18a, 30a) s'étendant à partir d'une surface intérieure de la paroi latérale (15) vers la pièce réceptrice (20) et une deuxième partie (18b, 30b) inclinée par rapport à la première partie (18a, 30a) et s'étendant verticalement, notamment vers le bas.

3. Haut-parleur selon la revendication 2, dans lequel la première partie (30a) des crochets (30) a un rayon de courbure en concordance de forme avec un bord tombé (20c) en saillie de la surface arrière de la pièce réceptrice (20) et la deuxième partie (30b) s'étend verticalement, notamment vers le bas et selon un rayon de courbure.

4. Haut-parleur selon l'une quelconque des revendications précédentes, comprenant en outre en partie inférieure deux portions d'appui (19) s'étendant horizontalement, à partir de la surface intérieure de la paroi latérale (15) au-delà de la collerette (14) vers la pièce réceptrice (20) et destinées à venir se positionner dans un orifice (24) de réception du haut-parleur (10) prévu sur la pièce de réception (20).

5. Haut-parleur selon la revendication précédente, dans lequel les portions d'appui (19) sont reliées par une paroi d'étanchéité (19b).

6. Haut-parleur selon la revendication 4 ou 5, dans lequel chaque portion d'appui (19) comprend au moins un godron sensiblement horizontal (19a) permettant le centrage du haut-parleur.

7. Haut-parleur selon l'une quelconque des revendications précédentes lorsqu'elle dépend de la revendication 2, dans lequel les premières parties (30a) des crochets (30) comportent sur leur surface extérieure au moins un godron sensiblement horizontal (30c) permettant le centrage du haut-parleur.

8. Haut-parleur selon l'une quelconque des revendications précédentes, comprenant au moins une saillie de blocage (32) s'étendant à partir de la surface intérieure de la paroi latérale (15) vers la pièce réceptrice (20).

## Patentansprüche

1. Lautsprecher (10) zur Befestigung auf einem Aufnahmeteil (20), das eine vordere Fläche (20a), eine hintere Fläche (20d) umfasst, der Lautsprecher (10) umfassend einen Körper (12), der von einer Vorderwand (13), einer Rückwand (14) zur Befestigung auf dem Aufnahmeteil (20) und einer Seitenwand (15), die die die Vorder- und Rückwand (13, 14) verbindet, begrenzt ist,wobei die Rückwand (14) einen Kragen bildet, der dazu bestimmt ist, auf der im Wesentlichen ebenen vorderen Fläche (20a) des Aufnahmeteils (20) aufzuliegen und mindestens eine Bohrung (14a) zur Befestigung auf dem Aufnahmeteil (20) umfasst, **dadurch gekennzeichnet, dass** der Lautsprecher (10) zwei Haken (18, 30) zum provisorischen Halt umfasst, die dazu bestimmt sind, mit dem Aufnahmeteil (20) zusammenzuwirken, wobei die Haken (18, 30) mit dem Körper (12) des Lautsprechers (10) einstückig ausgebildet sind und sich auf jeder Seite des Lautsprechers parallel zueinander und symmetrisch zur Symmetrieebene des Lautsprechers (10) erstrecken, und dadurch, dass der Lautsprecher (10) im unteren Abschnitt mindestens einen Stützabschnitt (19) umfasst, der sich horizontal ausgehend von einer Innenfläche der Seitenwand (15) über den Kragen hinaus erstreckt und dazu bestimmt ist, in einer Öffnung (24) zur Aufnahme des Lautsprechers (10) positioniert zu sein, die auf dem Aufnahmeteil (20) vorgesehen ist, um auf einem abgewinkelten Rand (20c) aufzuliegen, der von der hinteren Fläche (20d) des Aufnahmeteils (20) absteht.

2. Lautsprecher nach Anspruch 1, wobei jeder Haken (18, 30) einen ersten Abschnitt (18a, 30a), der sich ausgehend von einer Innenfläche der Seitenwand (15) zum Aufnahmeteil (20) erstreckt, und einen zweiten Abschnitt (18b, 30b), der bezogen auf den ersten Abschnitt (18a, 30a) geneigt ist und sich vertikal, insbesondere nach unten erstreckt, umfasst.

3. Lautsprecher nach Anspruch 2, wobei der erste Abschnitt (30a) der Haken (30) einen Krümmungsradius in Formschluss mit einem abgewinkelten Rand (20c), der von der hinteren Fläche des Aufnahmeteils (20) absteht, aufweist, und sich der zweite Abschnitt (30b) vertikal, insbesondere nach unten und entsprechend einem Krümmungsradius erstreckt.

4. Lautsprecher nach einem der vorhergehenden Ansprüche, ferner umfassend im unteren Abschnitt zwei Stützabschnitte (19), die sich horizontal ausgehend von der Innenfläche der Seitenwand (15) über den Kragen hinaus (14) zum Aufnahmeteil (20) erstrecken und dazu bestimmt sind, in einer Öffnung (24) zur Aufnahme des Lautsprechers (10) positioniert zu sein, die auf dem Aufnahmeteil (20) vorgesehen ist.

5. Lautsprecher nach dem vorhergehenden Anspruch, wobei die Stützabschnitte (19) durch eine Dichtwand (19b) verbunden sind.

6. Lautsprecher nach Anspruch 4 oder 5, wobei jeder Stützabschnitt (19) mindestens einen im Wesentlichen horizontalen Godron (19a) umfasst, der die Zentrierung des Lautsprechers gestattet.

7. Lautsprecher nach einem der vorhergehenden Ansprüche, wenn abhängig von Anspruch 2, wobei die ersten Abschnitte (30a) der Haken (30) auf ihrer Außenfläche mindestens einen im Wesentlichen horizontalen Godron (30c) aufweisen, der die Zentrierung des Lautsprechers gestattet.

8. Lautsprecher nach einem der vorhergehenden Ansprüche, umfassend mindestens einen Blockiervorsprung (32), der sich von der Innenfläche der Seitenwand (15) zum Aufnahmeteil (20) erstreckt.

## Claims

1. Loudspeaker (10) intended to be secured to a receiving part (20) comprising a front surface (20a), a rear surface (20d), the loudspeaker (10) comprising a body (12) delimited by a front wall (13), a rear wall (14) intended to be secured to the receiving part (20) and a lateral wall (15) connecting said front and rear walls (13, 14), the front wall (14) forming a collar intended to bear against the essentially planar front surface (20a) of the receiving part (20) and comprising at least one hole (14a) for securing on to the receiving part (20), **characterized in that** the loudspeaker (10) comprises two pre-holding hooks (18, 30) that are intended to cooperate with the receiving part (20), said hooks (18, 30) being integral with the body (12) of the loudspeaker (10) and extending on either side of the loudspeaker, being mutually parallel and symmetric with respect to the plane of symmetry of the loudspeaker (10), and **in that** the loudspeaker (10) comprises, in its lower part, at least one bearing portion (19) extending horizontally from an inner surface of the lateral wall (15) beyond the collar and intended to be positioned in an orifice (24) for receiving the loudspeaker (10) provided on the receiving part (20) so as to press against a dropped edge (20c) that projects from the rear surface (20d) of the receiving part (20).

2. Loudspeaker according to Claim 1, wherein each hook (18, 30) comprises a first part (18a, 30a) extending from an inner surface of the lateral wall (15) towards the receiving part (20) and a second part (18b, 30b) that is inclined with respect to the first part (18a, 30a) and extending vertically, in particular downwards.

3. Loudspeaker according to Claim 2, wherein the first part (30a) of the hooks (30) has a radius of curvature that matches the shape of a dropped edge (20c) projecting from the rear surface of the receiving part (20) and the second part (30b) extends vertically, in particular downwards and with a radius of curvature.

4. Loudspeaker according to any one of the preceding claims, further comprising, in its lower part, two bearing portions (19) extending horizontally from the inner surface of the lateral wall (15) beyond the collar (14) towards the receiving part (20) and intended to be positioned in an orifice (24) for receiving the loudspeaker (10) provided on the receiving part (20).

5. Loudspeaker according to the preceding claim, wherein the bearing portions (19) are connected by a sealing wall (19b) .

6. Loudspeaker according to Claim 4 or 5, wherein each bearing portion (19) comprises at least one essentially horizontal gadroon (19a) which serves for centring the loudspeaker.

7. Loudspeaker according to any one of the preceding claims, where dependent on Claim 2, wherein the first parts (30a) of the hooks (30) comprise, on their outer surface, at least one essentially horizontal gadroon (30c) which serves for centring the loudspeaker.

8. Loudspeaker according to any one of the preceding claims, comprising at least one immobilizing projection (32) that extends from the inner surface of the lateral wall (15) towards the receiving part (20).
